# FASCICULE DE BREVET EUROPEEN

(11) **EP 0 449 750 B1**
(45) Date de publication et mention de la délivrance du brevet: **05.01.1994**
(21) Numéro de dépôt: 91420085.2
(22) Date de dépôt: 12.03.1991
(51) Int. Cl.: B29C 45/14

(54) **Procédé pour la fabrication d'une chaussure ou sandale à semelle injectée et dispositif de mise en oeuvre de ce procédé**
Verfahren zur Herstellung eines Schuhs oder einer Sandale mit einer spritzgegossenen Sohle und Vorrichtung zur Durchführung dieses Verfahrens
Method for making a shoe or sandal with an injection moulded sole and apparatus for carrying out this method

(30) Priorité: 13.03.1990 FR 9003844
(43) Date de publication de la demande: 02.10.1991
(73) Titulaire: LA FOURMI S.A., F-49510 La Jubaudière (FR)
(72) Inventeur: Grimault, Bernard, F-49510 Jallais (FR)
(74) Mandataire: Maureau, Philippe

(56) Documents cités:
- DE-U- 6 604 099
- FR-A- 1 253 975
- FR-A- 1 283 249
- FR-A- 2 582 198
- GB-A- 2 096 528
- US-A- 3 510 912

## Description

La présente invention concerne un procédé pour la fabrication d'une chaussure ou sandale à semelle injectée et un dispositif de mise en oeuvre de ce procédé.

Habituellement, une chaussure de ce type comprend une tige cousue sur une pièce de peau, de tissu ou de matière synthétique appelée "première de montage" dont la face inférieure et la tranche sont noyées dans une matière synthétique moulée, par exemple du polychlorure de vinyle, et dont la face supérieure est recouverte par une pièce de peau ou de tissu collée sur elle, dite "première de propreté". Dans le cas d'une sandale, la tige est remplacée par une ou plusieurs bandes entourant le coup de pied, éventuellement accompagnées d'une bride arrière entourant le talon.

Pour réaliser ce type de chaussure ou de sandale, l'ensemble première de montage-tige ou bande et bride, après assemblage, est placé sur un support métallique ayant sensiblement la forme d'un pied, qui est ensuite positionné sur un moule, la partie du support contre laquelle se trouve la première de montage, qui correspond au dessous du pied, étant apte à constituer le couvercle de fermeture du moule. La matière synthétique destinée à constituer la semelle est ensuite injectée, puis, après refroidissement, la chaussure est démoulée, en suite de quoi la première de propreté est collée.

Cette chaussure présente l'inconvénient d'être d'une réalisation complexe et longue puisqu'elle implique la couture de la tige ou de la bande et de la bride précitées à une première de montage sur laquelle vient se coller la première de propreté. Il en résulte la nécessité de manipulations successives ainsi que l'emploi de matériels appropriés qui contribuent à pénaliser le prix de revient de chaque chaussure.

Le DE 66 04 099 décrit la possilibité d'assembler, pour la réalisation notamment d'une sandale, une bande destinée à entourer une partie du pied à une première au moyen de la matière synthétique moulée constituant la semelle, les bords libres de la bande étant rabattus contre la face inférieure de la première.

Le maintien de la première à ses extrémités lors de l'injection de la matière thermoplastique est problématique, la pression d'injection conduisant la matière à déplacer la première au cours de cette opération voire à la décoller de la forme, ce qui amène la matière à s'insinuer entre la forme et la première.

En outre, les bords de la bande, non maintenus, baillent plus ou moins et peuvent être déplacés par la matière ou gêner son injection.

La présente invention vise à remédier à ces inconvénients en fournissant un procédé et un dispositif simples à mettre en oeuvre, assurant un parfait maintien des différents éléments de la chaussure durant l'injection sans porter préjudice à l'aspect fini de la chaussure ou à la cadence de production.

A cette fin, le procédé qu'elle concerne est du type comprenant l'utilisation d'un support métallique ayant sensiblement la forme d'un pied destiné à être positionné sur un moule.

Le procédé selon l'invention consiste à :
- positionner tout d'abord la première de propreté sur le support en engageant des trous qu'elle comprend autour de doigts en saillie que comporte la face du support correspondant au dessous du pied, le diamètre des trous étant ajusté à celui des doigts de manière à ce que leur engagement se fasse avec des frottements ;
- positionner la tige ou la ou les bandes et l'éventuelle bride arrière précitées sur le support, en engageant des trous ménagés dans le bord inférieur de la tige ou les bords latéraux de la ou des bandes et de la bride arrière autour des doigts précités, le diamètre des trous étant ajusté à celui des doigts de manière à ce que leur engagement se fasse avec des frottements ;
- positionner le support sur le moule de manière à ce que l'extrémité de doigts parallèles et en saillie perpendiculairement à la paroi de fond d'empreinte du moule viennent appuyer sur les bords de la tige ou de la ou des bandes et de la bride précitées afin de les maintenir pressés contre la première de propreté, et sur la première de propreté elle-même au niveau de ses extrémités afin de la maintenir pressée contre la face du support le temps de l'injection de la matière synthétique destinée à constituer la semelle ;
- réaliser ensuite l'injection de la matière synthétique et le démoulage de la semelle après refroidissement.

L'engagement avec frottements des trous de la première de propreté et de la tige ou de la ou des bandes et bride arrière précitées autour des doigts assure le positionnement provisoire de ces pièces le temps que la matière synthétique soit injectée et durcisse pour assurer leur fixation définitive. Il n'est, dès lors, plus besoin de prévoir une première de montage sur laquelle sont cousues soit la tige, soit les bandes ou brides précitées.

L'invention concerne enfin un dispositif pour la mise en oeuvre de ce procédé. Ce dispositif est du type comprenant un support ayant sensiblement la forme d'un pied et un moule sur lequel le support est destiné à être positionné de manière à ce que sa face correspondant au dessous du pied constitue le couvercle de fermeture du moule.

Selon l'invention, la face du support correspondant au dessous du pied comprend des doigts en saillie et la paroi de fond d'empreinte du moule comporte des doigts parallèles et en saillie sensiblement perpendiculairement à elle-même qui, lorsque le support est positionné sur le moule, sont destinés à venir appuyer, par leur extrémité libre, sur les bords de la tige ou de la ou des bandes et de la bride précitées afin de les maintenir pressés contre la première de propreté, et sur la première de propreté elle-même au niveau de ses extrémités, afin de la maintenir pressée contre la face du support le temps de l'injection de la matière synthétique.

Avantageusement, la paroi de fond d'empreinte du moule est mobile selon une direction parallèle à celle des doigts qu'elle comporte, afin de faciliter le démoulage de la semelle, et les doigts du support qui sont situés vers l'avant de la chaussure ou de la sandale sont inclinés de manière à faciliter son retrait hors du support.

De toute façon, l'invention sera bien comprise à l'aide de la description qui suit, en référence au dessin schématique annexé représentant, à titre d'exemple non limitatif, une forme de réalisation d'un dispositif de mise en oeuvre du procédé selon l'invention de réalisation d'une sandale ainsi que de certaines phases de ce procédé.
Figures 1 et 3 sont des vues en coupe longitudinale de ce dispositif au cours de deux phases différentes du procédé ;
Figure 2 en est une vue en coupe transversale selon l'axe II-II de figure 1, au cours d'une autre phase du procédé ; et
Figure 4 est une vue en coupe selon IV-IV de figure 3.

Les figures représentent sous différents angles un support 2 ayant sensiblement la forme d'un pied et un moule 3.

Le support 2 comprend, sur sa face 2a qui correspond au dessous du pied et à proximité de ses bords, des doigts 5 parallèles entre eux et en saillie sensiblement perpendiculairement à la face 2a, et des doigts 6, parallèles entre eux et inclinés vers l'avant de la sandale à réaliser.

La première phase du procédé consiste tout d'abord à positionner une pièce 7 en une matière appropriée dite "première de propreté" contre la face 2a, en engageant des trous qu'elle comprend autour des doigts 5 et 6, le diamètre des trous étant ajusté à celui des doigts 5 et 6 de manière à ce que leur engagement se fasse avec des frottements. La deuxième phase du procédé consiste à positionner une bande 8 et une bride arrière 9 entourant les parties du support 2 correspondant respectivement au coup de pied et au talon, en engageant des trous ménagés dans leurs bords latéraux autour des doigts 5 et 6, le diamètre des trous étant également ajusté à celui des doigts de manière à ce que leur engagement se fasse avec des frottements.

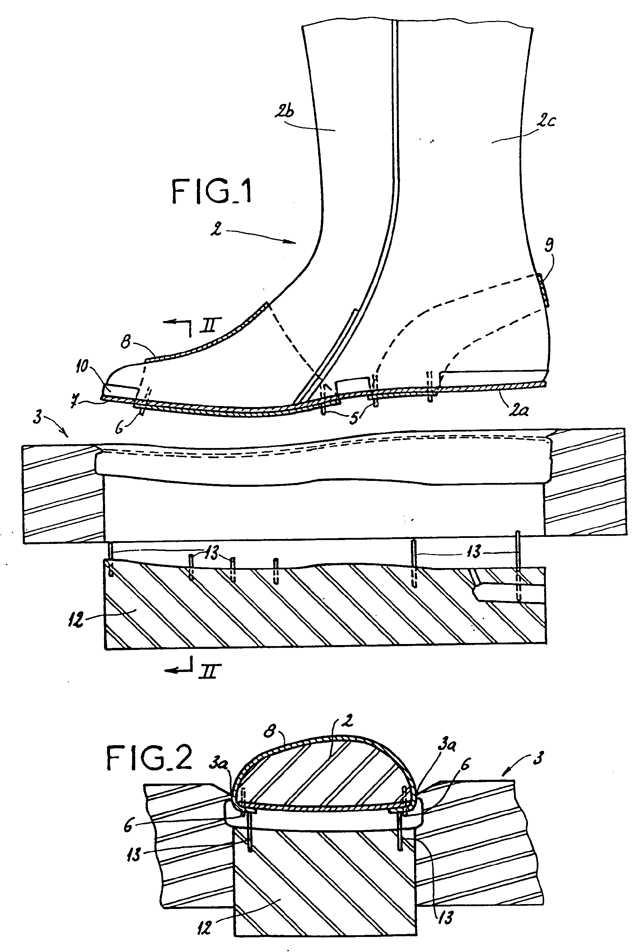

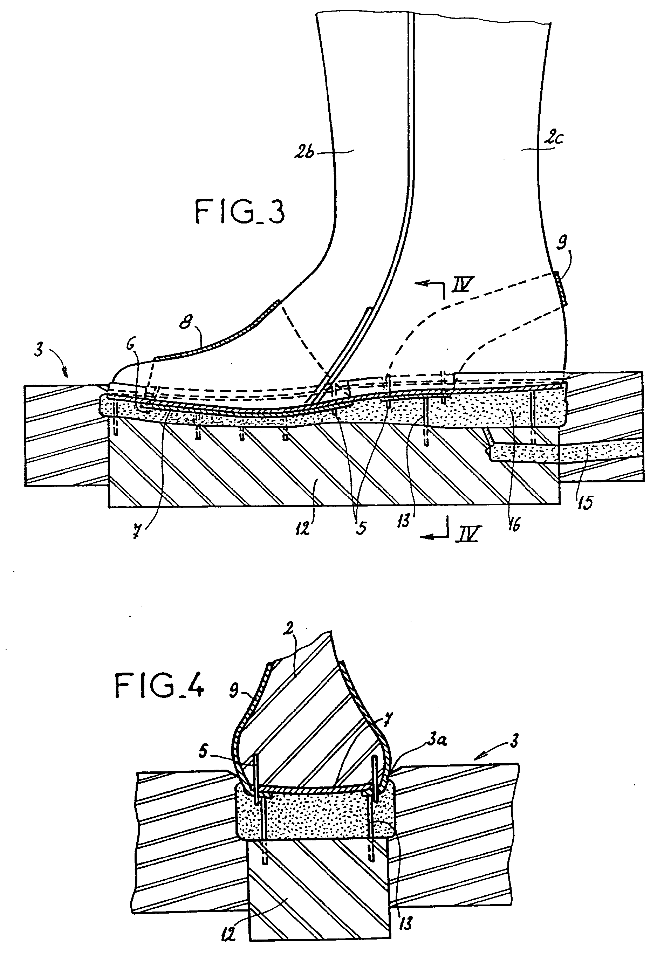

Le support 2 est ensuite positionné sur l'ouverture du moule 3 dont il est apte à constituer le couvercle de fermeture, les bandes 8 et bride 9 venant au contact des bords 3a du moule 3 (figures 2 et 4). Des surépaisseurs latérales 10 sont prévues sur le support 2 de manière à compenser l'épaisseur de la bande 8 et de la bride 9 pour assurer l'étanchéité du couvercle du moule que constitue le support 2.

Le moule 3 comprend une paroi de fond d'empreinte 12, qui est mobile et qui comprend des doigts 13 en saillie sensiblement perpendiculairement à elle-même, parallèles entre eux et disposés à proximité de ses bords longitudinaux.

Comme cela est visible sur la figure 2, lorsque le support 2 est positionné sur le moule 3, la paroi 12 est déplacée de manière à ce que les doigts 13 viennent, par leur extrémité libre, appuyer sur les bords repliés de la bande 8 et de la bride 9, afin de les maintenir pressés contre la première de propreté 7, et sur la première de propreté 7 elle-même au niveau de ses extrémités, afin de la maintenir pressée contre la face 2a du support 2 le temps de l'injection d'une matière synthétique destinée à constituer la semelle 16 de la sandale.

L'injection de la matière synthétique est ensuite réalisée grâce au canal approprié 15 ménagé dans le moule 3 et la paroi 12. Le démoulage de la semelle 16 est facilité par le mouvement de la paroi 12 qui s'en écarte et le retrait de la sandale terminée hors du support 2, qui s'effectue par coulissement de sa partie 2c le long de sa partie 2b qui est fixe, est facilité par l'inclinaison des doigts 6.

## Revendications

1. Procédé pour la réalisation d'une chaussure ou d'une sandale à semelle injectée, du type comprenant l'utilisation d'un support métallique ayant sensiblement la forme d'un pied destiné à être positionné sur un moule, caractérisé en ce qu'il consiste à :
- positionner tout d'abord la première de propreté (7) sur le support (2) en engageant des trous qu'elle comprend autour de doigts (5,6) en saillie que comporte la face (2a) du support (2) correspondant au dessous du pied, le diamètre des trous étant ajusté à celui des doigts (5,6) de manière à ce que leur engagement se fasse avec des frottements ;
- positionner la tige ou la ou les bandes (8) et l'éventuelle bride arrière (9) sur le support (2), en engageant des trous ménagés dans le bord inférieur de la tige ou les bords latéraux de la ou des bandes (8) et de la bride arrière (9) autour des doigts (5,6) précités, le diamètre des trous étant ajusté à celui des doigts (5,6) de manière à ce que leur engagement se fasse avec des frottements ;
- positionner le support (2) sur le moule de manière à ce que l'extrémité de doigts (13) parallèles et en saillie perpendiculairement à la paroi (12) de fond d'empreinte du moule (3) viennent appuyer sur les bords de la tige ou de la ou des bandes (8) et de la bride (9) précitées afin de les maintenir pressés contre la première de propreté (7), et sur la première de propreté (7) elle-même au niveau de ses extrémités afin de la maintenir pressée contre la face (2a) du support (2) le temps de l'injection de la matière synthétique destinée à constituer la semelle (16) ;
- réaliser ensuite l'injection de la matière synthétique et le démoulage de la semelle (16) après refroidissement.

2. Dispositif pour la mise en oeuvre du procédé selon la revendication 1, du type comprenant un support ayant sensiblement la forme d'un pied et un moule sur lequel le support est destiné à être positionné de manière à ce que sa face correspondant au dessous du pied constitue le couvercle de fermeture du moule, caractérisé en ce que la face (2a) du support (2) correspondant au dessous du pied comprend des doigts (5,6) en saillie et la paroi (12) de fond d'empreinte du moule (3) comporte des doigts (13) parallèles et en saillie sensiblement perpendiculairement à elle-même qui, lorsque le support (2) est positionné sur le moule (3), sont destinés à venir appuyer, par leur extrémité libre, sur les bords de la tige ou de la ou des bandes (8) et de la bride (9) précitées afin de les maintenir pressés contre la première de propreté (7) et sur la première de propreté (7) elle-même au niveau de ses extrémités afin de la maintenir pressée contre la face (2a) du support (2) le temps de l'injection de la matière synthétique.

3. Dispositif selon la revendication 2, caractérisé en ce que la paroi (12) de fond d'empreinte du moule (3) est mobile selon une direction parallèle à celle des doigts (13) qu'elle comporte.

4. Dispositif selon la revendication 3, caractérisé en ce que les doigts (6) du support (2) qui sont situés vers l'avant de la chaussure ou de la sandale sont inclinés.

## Patentansprüche

1. Verfahren zur Herstellung eines Schuhs oder einer Sandale mit gespritzter Sohle von der Art, das die Verwendung einer Metallstütze umfaßt, die im wesentlichen die Form eines Fußes aufweist und auf einer Form anzuordnen ist, dadurch gekennzeichnet, daß es darin besteht:
- zu allererst die Brandsohle (7) an der Stütze (2) zu positionieren, indem Löcher, die sie aufweist, um vorstehende Stifte (5, 6) herum in Eingriff gebracht werden, die die der Unterseite des Fußes entsprechende Seite (2a) der Stütze (2) aufweist, wobei der Durchmesser der Löcher an den der Stifte (5, 6) derart angepaßt ist, daß ihr Eingriff unter Reibung erfolgt;
- den Schaft oder den oder die
Riemen (8) und gegebenenfalls den Rückriemen (9) an der Stütze (2) zu positionieren, wobei im unteren Rand des Schaftes oder der Seitenränder des oder der Riemen (8) und des Rückriemens (9) ausgebildete Löcher um die vorerwähnten Stifte (5, 6) herum in Eingriff gebracht werden, wobei der Durchmesser der Löcher an den der Stifte (5, 6) derart angepaßt ist, daß ihr Eingriff unter Reibung erfolgt;
- die Stütze (2) an der Form derart anzuordnen, daß die Enden der parallelen und senkrecht von der Bodenwand (12) des Nestes der Form (3) hervorstehenden Stifte (13) gegen die vorerwähnten Ränder des Schaftes oder des Riemens oder der Riemen (8) und des Rückriemens (9) drücken, damit diese an die Brandsohle (7) angedrückt gehalten werden, und gegen die Brandsohle (7) selbst auf der Höhe ihrer Enden drükken, damit sie an die Seite (2a) der Stütze (2) angedrückt gehalten wird, wobei das Angedrücktgehaltenwerden während der Einspritzzeit des Kunststoffmaterials erfolgt, das die Sohle (16) bilden soll.

2. Vorrichtung zur Durchführung des Verfahrens nach Anspruch 1, von der Art, die eine Stütze im wesentlichen in der Form eines Fußes und eine Form aufweist, an der die Stütze zur Positionierung bestimmt ist derart, daß ihre der Unterseite des Fußes entsprechende Seite den Schließdeckel der Form bildet, dadurch gekennzeichnet,
daß die der Unterseite des Fußes entsprechende Seite (2a) der Stütze (2) vorstehende Stifte (5, 6) und die Bodenwand (12) des Nestes der Form (3) parallele und zu ihr im wesentlichen senkrecht hervorstehende Stifte (13) aufweist, die, wenn die Stütze (2) an der Form (3) positioniert ist, dazu bestimmt sind, mit ihren freien Enden gegen die vorerwähnten Ränder des Schaftes oder des Riemens oder der Riemen (8) und des Rückriemens (9) zu drücken, damit diese an die Brandsohle (7) angedrückt gehalten werden, und gegen die Brandsohle (7) selbst auf der Höhe ihrer Enden zu drücken, damit sie an die Seite (2a) der Stütze (2) angedrückt gehalten wird, wobei das Angedrücktgehaltenwerden während der Einspritzzeit des Kunststoffmaterials erfolgt.

3. Vorrichtung nach Anspruch 2, dadurch gekennzeichnet,
daß die Bodenwand (12) des Nestes der Form (3) in einer Richtung beweglich ist, die zu derjenigen der Stifte (13) parallel verläuft, die sie aufweist.

4. Vorrichtung nach Anspruch 3, dadurch gekennzeichnet,
daß die Stifte (6) der Stütze (2), die sich am vorderen Bereich des Schuhs oder der Sandale befinden, geneigt sind.

## Claims

1. A method of producing a shoe or a sandal having an injected sole, of the type including the use of a metal support having substantially the shape of a foot, intended to be located on a mould, characterised in that it consists in:
- firstly positioning the cleanliness insole (7) on the support (2) by engaging holes therein around projecting spigots (5,6) included on the face (2a) of the corresponding support (2) beneath the foot, the diameter of the holes corresponding to that of the spigots (5,6) so that they are frictionally engaged;
- positioning the upper or the strip or strips (8) and possibly the back strap (9) on the support (2), by engaging holes formed in the lower edge of the upper or the lateral edges of the strip or strips (8) and the back strap (9) around the aforementioned spigots (5,6), the diameter of the holes corresponding to that of the spigots (5,6) so that they are frictionally engaged;
- positioning the support (2) on the mould in such a manner that the ends of the spigots (13), which are parallel and project perpendicularly to the wall (12) of the mould base of the mould (3), come to bear on the edges of the aforesaid upper or of the strip or strips (8) or of the back strap (9) in order to hold them pressed against the cleanliness insole (7) and on the cleanliness insole (7) itself in the region of its ends in order to hold it dressed against the face (2a) of the support (2) during the injection of the synthetic material intended to constitute the sole (16); then carrying out the injection of the synthetic material and the extraction from the mould of the sole (16) after cooling.

2. A device for carrying out the method of Claim 1, of the type comprising a support having substantially the form of a foot and a mould on which the support is intended to be positioned so that its face corresponding to the underside of the foot constitutes the closure cover of the mould, characterised in that the face (2a) of the support (2) corresponding to the underside of the foot includes projecting spigots (5,6) and the wall (12) of the mould base of the mould (3) has spigots (13) which are parallel and project substantially perpendicularly thereto which, when the support (2) is positioned on the mould (3), are intended to come to bear, by their free ends, on the edges of the aforesaid upper or the strip or strips (8) and of the back strap (9) in order to hold them pressed against the cleanliness insole (7) and on the cleanliness insole (7) itself in the region of its ends in order to hold it pressed against the face (2a) of the support (2) during injection of the synthetic material.

3. A device according to Claim 2, characterised in that the wall (12) of the mould base of the mould (3) is movable in a direction parallel to that of the spigots (13) which it includes.

4. A device according to Claim 3, characterised in that the spigots (6) of the support (2) which are located towards the front of the shoe or the sandal are inclined.
